# EUROPEAN PATENT APPLICATION

(11) **EP 2 078 628 A2**
(43) Date of publication of application: **15.07.2009**
(21) Application number: 08254182.2
(22) Date of filing: 30.12.2008
(51) Int. Cl.: B60H 1/00, H01M 10/50

(54) **Cooling system of heating element**

(30) Priority: 08.01.2008 JP 2008001247
(71) Applicant: Calsonic Kansei Corporation, Kita-ku Saitama-shi Saitama-ken 331-8501 (JP)
(72) Inventor: Sakamoto, Takashi, Saitama-shi, Saitama-ken 331-8501 (JP)
(74) Representative: Oxley, Robin John George

(57) **Abstract**

A cooling system of a heating element includes a passenger compartment (6), a heating element (3b, 3f), a blower fan (2) and a conducting duct (4, 5). The blower fan (2) is capable of sucking the air in the passenger compartment (6) to supply the heating element (3b, 3f) with the air and cool the heating element (3b, 3f). The conducting duct (4, 5) has one end portion (8) connected with an inner space of the passenger compartment (6), the other end portion connected with the heating element (3b, 3f), and an intermediate portion provided with the blower fan (2) therein. The one end portion (8) of the conducting duct is provided with a liquid trapping portion/part (16) that separates the air and liquid contained in the air to prevent the liquid from entering the conducting duct (4, 5).

## Description

The present invention relates to a cooling system of a heating element such as a battery.

The hybrid electric vehicles are driven by an electric motor, which is supplied with electric power from second batteries, namely rechargeable batteries, such as nickel-cadmium batteries, nickel hydride batteries or lithium-ion batteries.
When the batteries generate heat due to chemical reaction therein so that the temperature of the batteries rises high, the discharge and charge efficiency of the batteries falls. In order to avoid this problem by cooling the batteries, the air in a passenger compartment is guided to flow through a case containing the batteries. Such a technology is disclosed in Japanese Patent Application Laid-Open Publication N0. 2005 - 205953.

The above known conventional cooling system of the batteries, however, has a problem in that, when liquid, such as spill of drinking water, dipping water from an umbrella and residual detergent for cleaning an interior of a moor vehicle, might flow in the case together with the air, the liquid flies in all possible directions to adhere on the batteries, consequently causing damage to the batteries such as electric insulation failure, corrosion, clogging up or others thereon. This deteriorates the efficiency of the batteries.

It is, therefore, an object of the present invention to provide a cooling system of a heating element which overcomes the foregoing drawbacks and can prevent liquid in a passenger compartment of a motor vehicle from flying to adhere on a heating element such as a battery.

According to a first aspect of the present invention there is provided a cooling system of a heating element including a passenger compartment, a heating element, a blower fan and a conducting duct. The blower fan is capable of sucking the air in the passenger compartment to supply the heating element with the air and cool the heating element. The conducting duct has one end portion connected with an inner space of the passenger compartment, the other end portion connected with the heating element, and an intermediate portion provided with the blower fan therein. The one end portion of the conducting duct is provided with a liquid trapping portion/part that separates the air and liquid contained in the air to prevent the liquid from entering the conducting duct.

Therefore, the liquid trapping portion/part separates the liquid contained in the air that sucked in from the passenger compartment, thereby suppressing damage to the heating element due to the liquid.

The objects, features and advantages of the present invention will become apparent as the description proceeds when taken in conjunction with the accompanying drawings, in which:
FIG 1 is a schematic diagram showing a cooling system of a heating element of a first embodiment according to the present invention;
FIG 2 is an enlarged cross sectional view showing an intake air duct that is used in the cooling system;
FIG 3 is a cross sectional view showing the intake air duct, taken along a line S3 - S3 in FIG 2;
FIG 4 is an enlarged cross sectional view showing an intake air duct that is used in a cooling system of a heating element of a second embodiment according to the present invention;

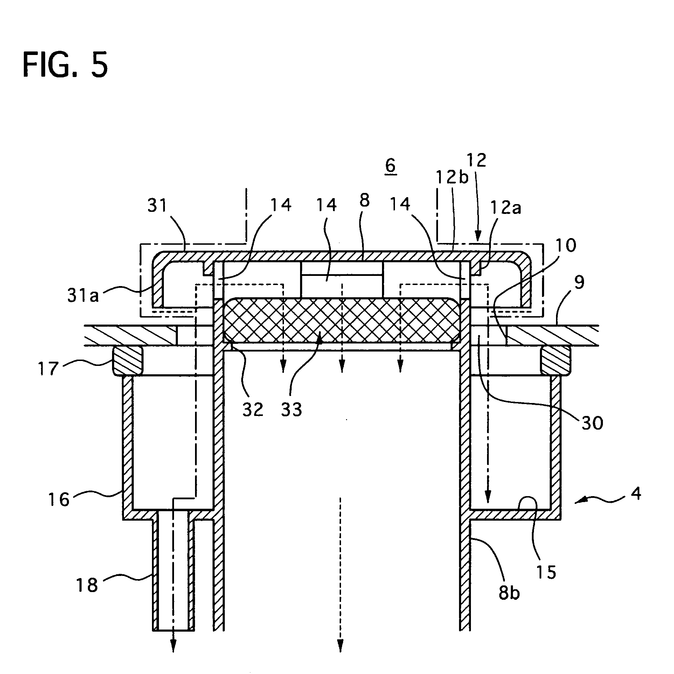

FIG 5 is an enlarged cross sectional view showing an intake air duct that is used in a cooling system of a heating element of a third embodiment according to the present invention;

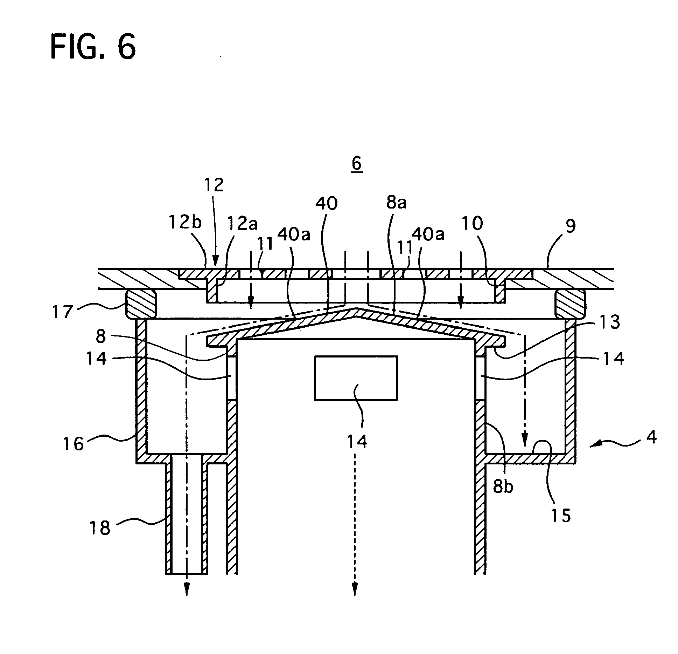

FIG 6 is an enlarged cross sectional view showing an intake air duct that is used in a cooling system of a heating element of a fourth embodiment according to the present invention; and

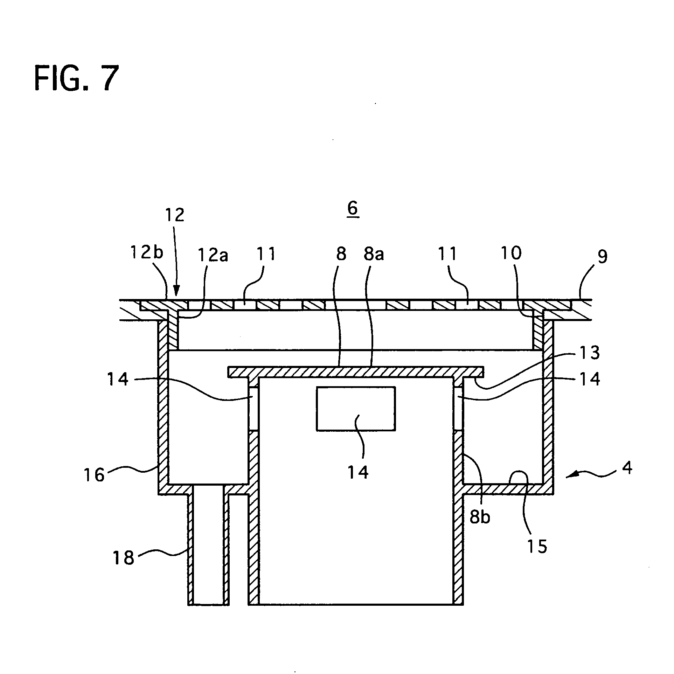

FIG. 7 is an enlarged cross sectional view showing an intake air duct that is used in a cooling system of a heating element of a fifth embodiment according to the present invention.

Throughout the following detailed description, similar reference characters and numbers refer to similar elements in all figures of the drawings, and their descriptions are omitted for eliminating duplication.

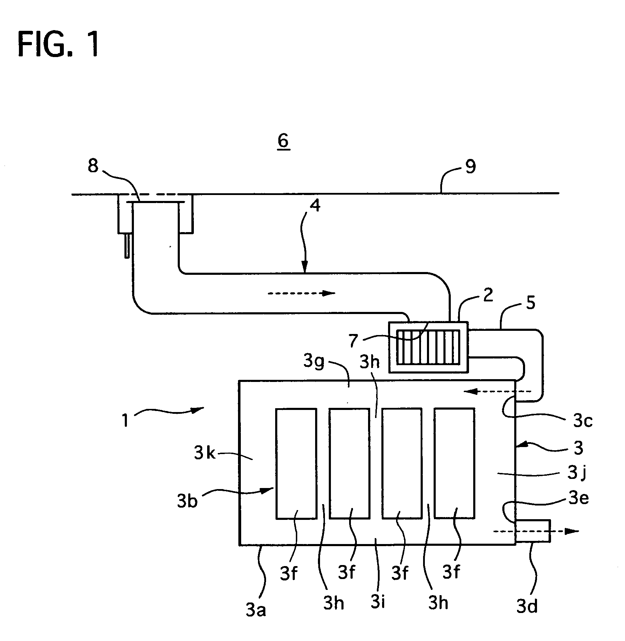

Referring to FIG 1 to FIG. 3 of the drawings, there is shown a first preferred embodiment of a cooling system of a heating element according to the present invention.

In the first embodiment, the cooling system of the heat element of the present invention is applied to a cooling device 1 of batteries 3b that are mounted on a hybrid electric vehicle and supplies electric power to a not-shown electric drive motor. The batteries 3b are contained in a battery package 3, which is arranged on both side portions and a lower portion of a luggage compartment located at a rear side of the hybrid electric vehicle.

The cooling device 1 of the batteries 3b includes a blower fan 2, an intake duct 4, a connecting duct 5, an exhaust duct 3d and others. The intake duct 4 has an opening communicatable with a passenger compartment 6 at one end portion 8 thereof, and is connected with an inlet port of the blower fan 2 at the other end portion 7 thereof. The connecting duct 5 is connected with an outlet port of the blower fan 2 at one end portion thereof, and is connected with an induction port 3c of the battery package 3 at the other end portion thereof. Incidentally, the intake duct 4 and the connecting duct 5 act as a conducting duct of the present invention.

The blower fan 2 is electrically driven to suck in the air from an interior of the passenger compartment 6 through the intake duct 4, and then to supply the air into the battery package 3 to be cooled. The blower fan 2 is disposed on the battery package 3. The blower 2 is electrically connected to a not-shown control unit to be driven when a not-shown temperature sensor detects more than a predetermined temperature of the batteries 3b or their predetermined ambient temperature.

The battery package 3 has a case 3a shaped like a horizontally long box, the batteries 3b contained in the case 3a, not-shown electric cables, electric terminals and others.

The batteries 3b consist of a plurality of battery modules 3f, four battery modules 3f in the first embodiment, that are arranged parallel to each other along a longitudinal direction of the case 3a so that a predetermined clearance is formed between the adjacent battery modules 3f. Each of the battery modules 3f is a secondary battery, which is rechargeable, such as nickel-cadmium batteries, nickel hydride batteries, lithium-ion batteries or the like. The battery modules 3f are connected in series or parallel with each other by not-shown electric cables. Incidentally, each battery 3b, battery module 3f corresponds to a heating element of the present invention.

The case 3a is provided with the induction port 3c that is formed in an upper side portion of thereof to induce the air to an inner space of the case 3a therethrough, and also with an exhaust port 3e that is formed under the induction port 3c to discharge the air in the case 3a toward the luggage compartment or an exterior of the hybrid electric vehicle through the exhaust duct 3d.

The batteries 3b are arranged in the case 3a so that spaces are formed between the adjacent battery modules 3f and also between the battery module 3f and the case 3a so as to pass the air therethrough. Specifically, the battery package 3 is formed inside thereof with an upper air passage 3g, a plurality of bypass air passages 3h, a first side air passage 3j, a second side air passage 3k and a lower air passage 3i.

The upper air passage 3g is formed above battery modules 3f so that the cooling air, which is sucked by the blower fan 2 from the passenger compartment 6 through the intake duct 4 and the connecting duct 5, enters the case 3a through the induction port 3c that is formed on an upper portion of one side wall portion of the case 3a to flow toward the other side wall portion of the case 3a along an upper outer circumferential surface of the battery modules 3f.

The bypass air passages 3h are formed between the adjacent battery modules 3f to flow some of the air in the upper air passage 3g downward. The first side air passage 3j and the second air passage 3k are formed between the one side wall portion of the case 3a and the nearest battery module 3f thereto and between the other side wall portion of the case 3a and the nearest battery module 3f thereto, respectively, so that they flow the rest of the air in the upper air passage 3g downward.

The lower air passage 3i is formed under the battery modules 3f so that the air entering through the bypass air passages 3h and the first and second side air passages 3j and 3k flows to the exhaust port 3e formed under the induction port 3c and on the one side wall portion of the case 3a.

Accordingly, these air passages 3g to 3k can guide the cooling air, sucked from the passenger compartment 6, into the case 3a to cool the battery modules 3f at high temperature by means of heat exchange between the air flowing through the air passages 3g to 3k and the battery modules 3f.

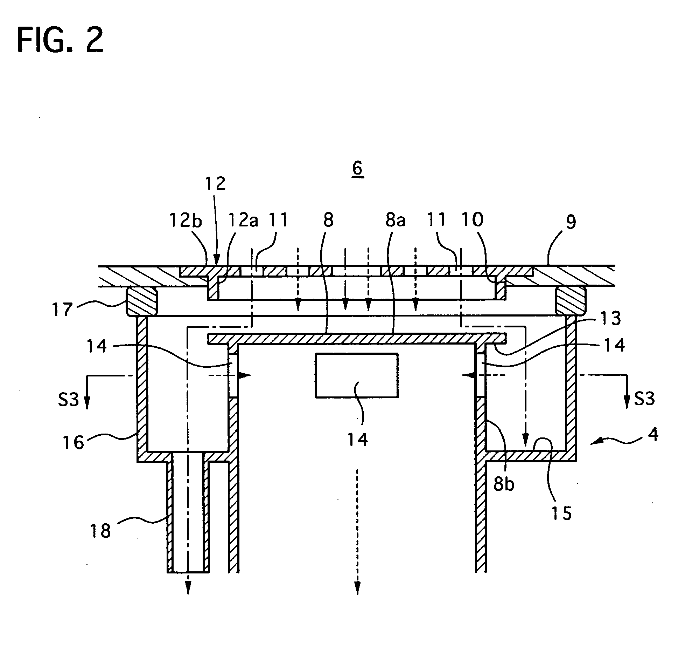

Herein, the intake dust 4 will be described in detail.
As shown in FIG 2, a rear parcel rack 9 is provided behind a not-shown rear seat in the passenger compartment 6, and the rear parcel rack 9 is formed with an opening hole 10 having a circular shape to communicate an inner side of the passenger compartment 6and an outer side thereof with each other. The rear parcel rack 9 corresponds to a partition part of a passenger compartment of the present invention.

A cap 12 is shaped like a disc to have an upper disc portion 12b that is formed with a plenty of communicating holes 11 and a circular cylindrical portion 12a that is projected downward from the upper disc portion 12b. The circular cylindrical portion 12a of the cap 12 is inserted into and fitted to the opening hole 10 so that the cap 12 is fixed on the rear parcel rack 9. Incidentally, the cap 12 functions as a part of the rear parcel rack 9.

The one end portion 8 of the intake duct 4 is disposed directly under the opening hole 10 to be headed upward, and a top surface 8a of the one end portion 8 of the intake duct 4 is blocked up by a flange portion 13 that is formed with the intake duct 4 as one unit and projects outwardly in a radial direction of the intake duct 4. The outer-circumferential side wall portion 8b of the intake duct 4 continues to a lower surface the flange portion 13, and it is provided with a plurality of opening portions 14 formed like a rectangular shape along its outer circumferential surface at regular intervals. In this first embodiment, the number of the opening portions 14 is four, being located apart from each other at intervals of 90 degrees. Incidentally, the number, the shapes and an arrangement of the opening portions 14 may be set appropriately. Each of the opening portions 14 corresponds to a passenger-compartment side opening portion of the present invention.

In addition, the intake duct 4 is provided on its outer-circumferential side wall portion 8b with a liquid trap portion 16, which is formed on the intake duct 4 as one unit to have a circular cylindrical shape with a bottom portion 15 that is set lower than lower edge portions of the opening portions 14. The liquid trap portion 16 opens upward, and a predetermined empty space is formed between an inner side surface thereof and the outer-circumferential side wall portion 8b of the intake duct 4 so as to trap liquid such as water. Incidentally, the liquid trap portion 16 and the flange portion 13 correspond to a liquid trapping portion/part of the present invention.

The top portion of the liquid trap portion 16 is attached to the lower surface of the rear parcel rack 9 through a circular sealing member 17, so that an inner space, corresponding to the empty space, of the liquid trap portion 16 is separated from a space under the rear parcel rack 9.

On the other hand, the bottom portion 15 of the liquid trap portion 16 is integrally provided with a discharge pipe 18, which projects from a lower surface of the liquid trap portion 16 to be fluidically communicated with the inner space formed between the inner side surface thereof and the outer circumferential surface of the intake duct 4. A lower opening portion of the discharge pipe 18 is connected with a not-shown hose that fluidically communicates with of an exterior of the hybrid electric vehicle so that the liquid can fall down in the hose due to its own weight to be discharged therefrom. Incidentally, the discharge pipe 18 corresponds to a discharge portion of the present invention.

The operation of the cooling system of the heating element of the first embodiment will de described.

The control unit receives a temperature signal outputted from the temperature sensor.

When the control unit judges, based on the temperature signal, that the temperature of the battery 3b is equal to or less than the predetermined one, the blower fan 2 is not activated because there in no need to cool the battery modules 3f. Consequently, the air in the passage compartment 6 is not sucked in through the intake duct 4.

On the other hand, when the control unit judges that the temperature of the battery 3b is higher than the predetermined one, the control unit starts to run the blower fan 2. The blower fan 2 sucks the air in from the passenger compartment 6 through the intake duct 4, and sends the sucked cooling air to the case 3a through the connecting duct 5. The air enters the case 4 through the induction port 3c to flow through the upper air passage 3g, then through the bypass air passages 3f and the first and second side air passages 3j and 3k, and finally through the lower air passage 3i, thereby cooling the battery modules 3f. Then the air is discharged through the exhaust port 3e, the exhaust pipe 3d and the hose to the exterior of the vehicle. Incidentally, the flow directions of the air are indicated by broken lined arrows in FIGS. 1 to FIG 3.

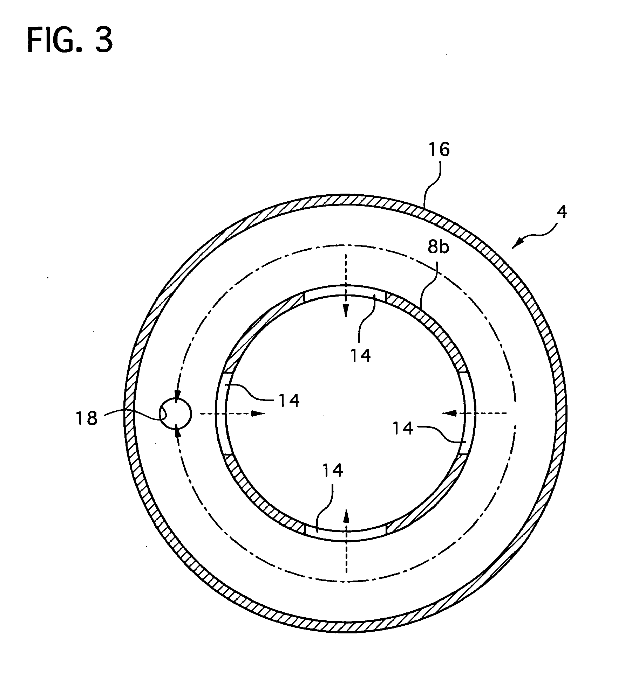

In this operation when the air is sucked in from the passenger compartment 6, the air sucked flows downward, as indicated by broken lined arrows in FIG 2, in a space formed between the disc potion 12b and the flange portion 13 of the intake duct 4 through the communicating holes 11. The air hits the top surface 8a of the flange portion 13 at high speed, because of small areas of the opening portions 11, and it changes its flow direction toward outwardly in the radial direction, then downwardly to the circular space formed between the inner side surface of the liquid trap portion 16 and the outer circumferential surface of the intake duct 4. The air easily changes its flow direction toward inwardly in the radial direction to flow in the intake duct 4 through the opening portions as indicated by the broken lined arrows in FIG 2 and FIG. 3, because the liquid trap portion 16 has the bottom portion 15 and the mass density of the air is small. This cooling air is introduced in the case 3a to cool the battery modules 3f, as described above.

On the other hand, when the air is sucked in from the passenger compartment 6, the liquid such as spill of drinking water, dipping water from an umbrella and residual detergent for cleaning an interior of a moor vehicle, might come in through the communicating holes 11 together with the air. In this case, the liquid hits the flange portion 13 of the intake duct 4 at high speed, and some of the liquid flows outwardly in the radial direction along the top surface 8a of the flange portion 13, the rest of them being flown outwardly in the radial direction toward the inner side surface of the liquid trap portion 16.

Then the liquid falls down from the outer circumference thereof as indicated by alternate long and two short dashes line arrows in FIG. 2. The liquid cannot change its direction to the opening portions 14 because the mass density of the liquid, consequently its inertia, is notably larger than that of the air, and also because the opening portions 14 are formed at positions under and near the flange portion 13 in addition that the flange portion 13 projects from the outer circumferential surface of the intake duct 4 in the radial direction sufficiently to prevent the liquid from flowing in the intake duct 4 through the opening portions 14.

Accordingly, the liquid accumulates on the bottom portion 15 of the liquid trap portion 16, then being discharged to the exterior of the motor vehicle through the discharge pipe 18 and the hose.

As a result, the liquid contained in the air is separated from the air by the liquid trap portion 16 and the flange portion 13, so that the battery modules 3f are prevented from being wet due to the entrance of the liquid through the intake duct 4.

On the other hand, when the blower fan 2 is not activated and the liquid happens to flow in the inner space between the between the disc potion 12b and the flange portion 13 of the intake duct 4 through the communicating holes 11, the liquid is separated and discharged to the exterior of hybrid electric vehicle by the liquid trap portion 15 and the flange portion 13.

As understood from above, the cooling system of the heating element of the first embodiment has the following advantages.

Since the cooling system of the first embodiment has the liquid trap portion 15 and the flange portion 13, they can separate the liquid from the air that is sucked in together with the liquid through the opening portions 11 of the cap 12 attached on the rear parcel rack 9. Therefore, only the air enters the intake duct 4 and the case 3 a containing the battery modules 3f, so that they are free from the damage such as electric insulation failure, corrosion, clogging up or others on the batteries 3b. This avoids the deterioration in the efficiency of the batteries 3b.

Next, a cooling system of a heating element of a second embodiment according to the present invention will be described with the accompanying drawings.

In the cooling system of the second embodiment, there is provided a filter member 20 between a cap 12 and a flange portion 13 of an intake duct 4. The filter member 20 is shaped like a circular cylinder, being fixed by contacting with a circular cylinder portion 12a projected downward from the flange portion 13. The filter member 20 is set to have a diameter smaller than that of a opening hole 10 formed in the rear parcel rack 9 so that the filter member 20 can be taken out toward the passenger compartment through the opening hole 11 .The type, material and fixing method of the filter member 20 may be set appropriately.

The other parts and portions of the cooling system of the second embodiment are constructed similarly to those of the first embodiment.

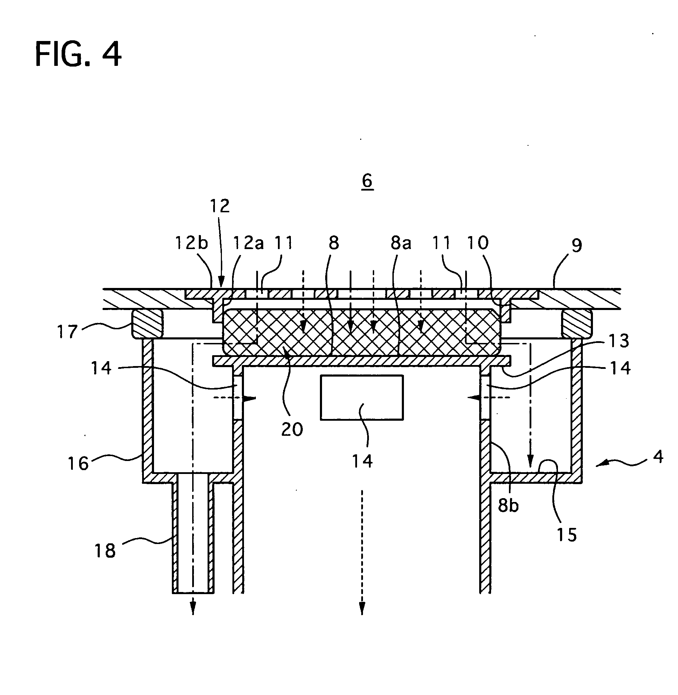

In this second embodiment, the air can be sucked in from a passenger compartment 6 through the communicating holes 11, entering a space formed between a lower surface of the cap 12 and an upper surface of the flange portion 13, where foreign matter contained in liquid, sucked in together with the air, is caught by the filter member 20. In addition, the air changes its flow direction toward outwardly in a radial direction of the intake duct 4, then falling down into a space formed between an inner side surface of a liquid trap portion 16 and an outer circumferential surface of the intake duct 4 to change its flow direction again into the intake duct 4 through opening portions 14 thereof. The air is introduced into a case to cool battery modules contained therein, then being discharged to an exterior of a motor vehicle. The flow paths of the air are indicated by broken lined arrows in FIG. 4.

On the other hand, the liquid, entering the space between the lower surface of the cap 12 and the upper surface of the flange portion 13, falls down on a bottom portion of the liquid trap portion 16, then being discharged to the exterior through a discharge pipe 18 and a not-shown hose. The flow paths of the liquid are indicated by alternate long and short dash lined arrows in FIG. 4.

Therefore, the cooling system of the second embodiment has the following advantages in addition to those of the first embodiment.

The foreign matter in the liquid that is sucked in can be removed by the filter member 20, so that trouble in the battery modules due to adhesion of the foreign matter can be avoided.
Incidentally, the filter member 20 can be easily detached from the space to be scavenged or exchanged after the cap 12 is removed from a rear parcel rack 9.

Next, a cooling system of a heating element of a third embodiment according to the present invention will be described with the accompanying drawings.

In the cooling system of the third embodiment, one end portion 8 of an intake duct 4 penetrates through an opening hole 10 of a rear parcel rack 9 with a predetermined annular clearance therebetween to project upward therefrom. The one end portion 8 of the intake duct 4 has an opening at its top, and a cap 31 is attached on the end portion by being fitted into a circular cylinder portion 12a of the cap 31. The four opening portion are formed in an outer circumferential side wall portion of the one end portion and a lower surface of the cap 12.

The cap 12 has a flange portion 31a, which is larger in diameter than the intake duct 4, being bent to extend downward at its outer edge portion. This bending portion of the flange portion 31a is set to extend lower than a lower edge portions of the opening portions 14, and the lower edge portions of the opening portions 14 are set higher than an upper surface of the rear parcel rack 9.

On the other hand, the intake duct 4 is provided with an inner projecting ring portion 32 on an inner surface of the intake duct 4 at a position lower than the lower edge portions of the opening portions 14. The inner projecting ring portion 32 and the inner surface of the intake duct 4 hold a filter member 33 formed like a circular cylinder.

The other parts and portions of the third embodiment are constructed similarly to the first embodiment.

In this third embodiment, the flow paths of the air are indicated by broken lined arrows, and the flow paths of the liquid are indicated by alternate long and short dash lined arrows.

The air is sucked in the intake duct 4 through a cylindrical clearance between the flange portion 31a of the cap 31 and the upper surface of the rear parcel rack 9 and also through the opening portion 14. Then the air passes through the filter member 33, flowing in a case to cool battery modules and being discharged to the exterior of a motor vehicle. Foreign matter in the air is caught by the filter member 33.

On the other hand, the liquid in the air is also sucked, and it falls down in the liquid trap portion 16 formed around the intake duct 4 because its mass density is too large to flow over the lower edge portions of the opening portions 14. The liquid accumulates on the bottom portion 15 of the liquid trap portion 16, then being discharged to the exterior through an dischrage pipe 18 and a not-shown hose.

The cooling system of the third embodiment has the advantages similar to the first and second embodiments. In addition, the cap 31 can be easily detached because the flange portion 31a of the cap 31 is apart from the upper surface of the rear parcel rack 9.

Next, a cooling system of a heating element of a fourth embodiment according to the present invention will be described with the accompanying drawings.

In the cooling system of the fourth embodiment, a flange portion 40 is formed on one end portion 8 of an intake duct 4 as one unit. The flange portion 40 is formed to have an upper surface 40a that is inclined downward from its center to form a cone shape, extending more outwardly in a radial direction thereof than an outer-circumferential side wall portion 8b of the intake duct 4. Incidentally, the configuration of the flange portion 40 is not limited to the cone shape, and it may have other shapes as long as it can guide liquid in the air to a liquid trap portion 16.

The other parts and portions are constructed similarly to those of he first embodiment.

The cooling system of the fourth embodiment has the following an advantage in addition to the advantages similar to those of the first embodiment.

The cone-shaped flange portion 40 ensures the liquid passing through communicating holes 11 of a cap 12 to fall down in the liquid trap portion16, avoiding the air from flowing into the intake duct 4 through its opening portions 14.

In this fourth embodiment, the flow paths of the air are indicated by broken lined arrows, and the flow paths of the liquid are indicated by alternate long and short dash lined arrows.

Next, a cooling system of a heating element of a fifth embodiment according to the present invention will be described with the accompanying drawings.

In the cooling system of the fifth embodiment, an upper portion of a liquid trap portion 16, which is formed around one end portion 8 of an intake duct 4, are fitted on and fixed to an outer circumferential side wall portion of a circular cylindrical portion 12a of a cap 12 instead of a rear parcel rack 9 like the first to fourth embodiments.

The cooling system of the fifth embodiment has the following advantage in addition to the advantages of the first embodiment.

It can decrease manufacturing cost to fix the upper portion of the liquid trap portion 16 on the circular cylindrical portion 12a of the cap 12.

While there have been particularly shown and described with reference to preferred embodiments thereof, it will be understood that various modifications may be made therein.

The flange portions 13 and 40 are formed with the one end portion 8 of the intake duct 4 as one unit, but they may be formed as separated parts to be fixed with each other. This fixation may be adhesion after assembly thereof.

## Claims

1. A cooling system of a heating element comprising:
a passenger compartment (6);
a heating element (3b, 3f);
a blower fan t(2) hat is capable of sucking the air in the passenger compartment (6) to supply the heating element (3b, 3f) with the air and cool the heating element (3b, 3f); and
a conducting duct (4, 5) that has one end portion (8) connected with an inner space of the passenger compartment (6), the other end portion connected with the heating element (3b, 3f), and an intermediate portion provided with the blower fan (2) therein, wherein
the one end portion (8) of the conducting duct (4, 5) is provided with a liquid trapping portion/part (16) that separates the air and liquid contained in the air to prevent the liquid from entering the conducting portion/part (4, 5).

2. The cooling system of a heating element according to claim 1, wherein
the liquid trapping portion/part (16) discharges the liquid to an exterior of a vehicle.

3. The cooling system of a heating element according to claim 1 or claim 2, wherein
the one end portion (8) of the communicating duct is provided with a filter member (20, 33) that catches a foreign matter contained in at least one of the air and the liquid.

4. The cooling system of a heating element according to claim 3, wherein
the filter member (20) is detachably attached on at least one of the liquid trapping portion/part (16) and the one end portion (8) of the communicating duct (4, 5).

5. The cooling system of a heating element according to claim 3 or claim 4, wherein
the filter member (20) has a diameter smaller than a diameter of a opening hole (10) formed in a partition part (9) of a vehicle so that the filter member (20) can be taken out toward the passenger compartment (6) through the opening hole (10).

6. The cooling system of a heating element according to claim 5, wherein
the partition part (9) has a cap (12; 31)that is fitable into the opening hole (10) and has a communicating hole (11).

7. The cooling system of a heating element according to any one of claims 1 to 6, wherein
the heating element is a battery (3b, 3f) mounted on a vehicle.

8. The cooling system of a heating element according to any one of claims 1 to 7, wherein
the one end portion (8) of the communicating duct (4, 5) is blocked up at a top portion there of, being disposed under an opening hole (10) of a partition part (9) of the passenger compartment, the one end portion (8) being formed on an outer-circumferential side wall portion (8b) with a passenger-compartment side opening portion (14) that allows the air to pass therethrough at a position under the top portion, wherein
the liquid trapping portion/part (16) is provided on an outer-circumferential side wall portion (8b) of the communicating duct (4, 5) at an outer side thereof, the liquid trapping portion/part (16) having a bottom portion (15) that is positioned under the passenger-compartment side opening portion (14) and is formed with a discharge portion (18) discharging the liquid to an exterior of a vehicle.

9. The cooling system of a heating element according to any one of claims 1 to 7, wherein
the one end portion (8) of the communicating duct (4, 5) is blocked up at a top portion there of, being projecting upward through an opening hole (10) of a partition part (9) of the passenger compartment (6), the one end portion (8) being formed on an outer-circumferential side wall portion (8b) at a position under the top portion with a passenger-compartment side opening portion (14) that allows the air to pass therethrough, wherein
the top portion is provided with a flange portion (31) with an outer circumferential portion (31a) that extends downward toward an upper surface of the partition part (9) to a position lower than the passenger-compartment side opening portion (14) of the one end portion (8) of the communicating duct (4, 5), and wherein
the liquid trapping portion/part (16) is provided on an outer-circumferential side wall portion (8b) of the communicating duct (4, 5) at an outer side thereof, the liquid trapping portion/part (16) having a bottom portion (15) that is positioned under the passenger-compartment side opening portion (14) and is formed with a discharge portion (18) discharging the liquid to an exterior of a vehicle.

10. The cooling system of a heating element according to any one of claims 1 to 9, wherein
the top portion is provided with a flange portion (13; 40) that projects outwardly in a radial direction from the communicating duct (3, 4).

11. The cooling system of a heating element according to claim 10, wherein
the flange portion (40) has an upper surface (40a) that inclines downward from a center thereof.
